# EUROPÄISCHE PATENTSCHRIFT

(11) **EP 1 199 695 B1**
(45) Veröffentlichungstag und Bekanntmachung des Hinweises auf die Patenterteilung: **28.09.2005**
(21) Anmeldenummer: 01124652.7
(22) Anmeldetag: 16.10.2001
(51) Int. Cl.: G09F 3/04

(54) **Label zur Oberflächenausgestaltung von Behältnissen**
Label for the superficial configuration of containers
Etiquette adaptée à la configuration superficielle de conteneurs

(30) Priorität: 18.10.2000 DE 20017831 U
(43) Veröffentlichungstag der Anmeldung: 24.04.2002
(73) Patentinhaber: RPC Bramlage GmbH, 49393 Lohne (DE)
(72) Erfinder: Bellersen, Aloys, 49393 Lohne (DE); Hinz, Gregor, 29693 Hademstorf (DE)
(74) Vertreter: Mey, Klaus-Peter

(56) Entgegenhaltungen:
- US-A- 5 172 936
- US-A- 5 405 667

## Beschreibung

Die Erfindung betrifft ein Label bzw, eine Etikettierung zur Oberflächenausgestaltung von Behältnissen durch "Inmouldlabeling", insbesondere zur Oberflächengestaltung der Seitenflächen und/oder Böden von im Horizontalquerschnitt in etwa rechteckigen, ovalen oder runden Kunststoffbehältnissen, wobei vor der Abformung der Behältnisse mittels Spritzgusstechnik das Label in die Form bzw. das Formwerkzeug eingeführt wird, d. h. auf dem Formkern oder an die Kontur der Formvertiefung angelegt wird, wonach dann der Spritzguss des Behältnisses durchgeführt wird und ein Behältnis mit festverbundener Etikettierung bzw. Aufdruck erzeugt wird, beispielsweise ein verkaufsfertiger Margarinebecher, der lediglich noch einer Füllung bedarf. Aus dem Dokument US-A-5 172 936 ist ein habel zur Oberflächenausgestaltung von Behältnissen durch "Inmouldiabeling" bekannt, wobei ein Teil des Labels durch weniger Klebstoff leichter entfernbar ist.

Aus der JP 08 244 067 A ist ein Label mit vier Ecken bekannt, die jeweils einen kleinen Schnitt aufweisen.

Beim Inmouldlabeling besteht bei Labeln bekannter Ausbildung das Problem, dass sich im Eckbereich der Spritzgussform das Label nicht einwandfrei an die Kontur der Formvertiefung oder auf dem Kern der Form anlegt. Dies führt dann während des Abformens, d. h. während des Spritzvorgangs dazu, dass das Label unterspritzt wird und ein Ausschussteil entsteht. Die Ausschussteile müssen aufwendig aussortiert werden und gelangen oft in die Fertigware, wenn die fehlerhaften Teile nicht erkannt werden.

Es ist Aufgabe der Erfindung, ein Label entsprechend der im Oberbegriff des Anspruchs 1 genannten Art so auszubilden, dass die beschriebenen bisherigen Nachteile, die bei der Verwendung von Labeln bekannter Ausbildung auftreten, weitgehend vermieden werden.

Die gestellte Aufgabe wird bei Labeln der vorstehend beschriebenen Art mit den kennzeichnenden Merkmalen des Anspruchs 1 dadurch gelöst, dass zur besseren Anlage des Labels an die Kontur bzw. auf dem Kern der Form in mindestens einem einspringenden Eckbereich einer Ecke des Labels, von mindestens einer Labelkante ausgehend, jeweils mindestens ein Einschnitt vorgesehen ist.

Durch die erfindungsgemäße Ausbildung des Labels mit mindestens einem Einschnitt bzw. Schlitz ist es nun möglich, mit dem Label in einwandfreier Passform eine verbesserte Anlage an der Kontur bzw. auf dem Kern der Form zu erreichen und so mit eine einwandfreie Produktion der Behältnisse zu gewährleisten.

Die Anzahl, Länge und Form der Einschnitte bzw. Schlitze ist dabei von der Größe und Form der Behältnisse abhängig und werden durch entsprechende Tests festgelegt.

Nachfolgend wird an zwei in Zeichnungsfiguren schematisch dargestellten Ausführungsbeispielen die Erfindung näher erläutert.

Es zeigen:
- Fig. 1: ein "aufgeklapptes" Label ohne Aufdruck in Draufsicht,
- Fig. 2: einen Teilausschnitt "A" der Fig. 1 mit einer möglichen Ausführungsform der Einschnitte,
- Fig. 3: einen weiteren Teilausschnitt "A" der Fig. 1 mit einer weiteren möglichen Ausführungsform der Einschnitte als Schlitze mit Radius.

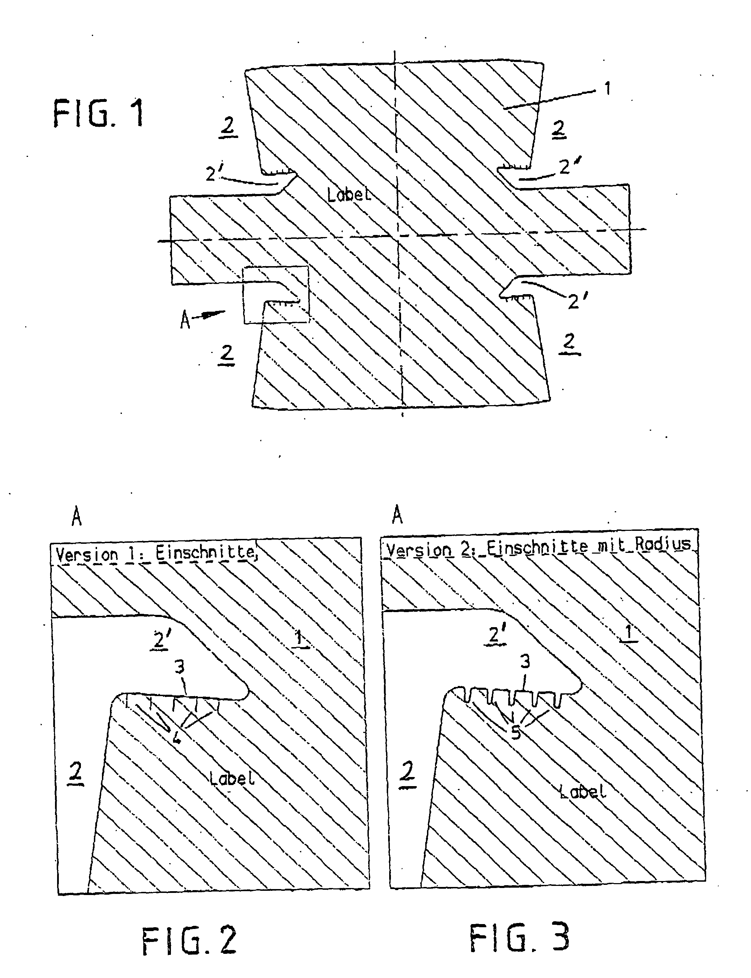

In Figur 1 ist ein Label bzw. eine Etikettierung 1 in einer "aufgeklappten" Draufsicht dargestellt. Das Label 1 ist kreuzförmig ausgebildet und weist vier Ecken 2 mit einspringenden Eckbereichen 2' auf, die dafür sorgen sollen, dass sich das Label 1 nach seiner Einführung in die Form an die Kontur der Formvertiefung bzw. auf dem Kern der Form passgenau anlegt. Als Teilausschnitt "A" ist dieser Teilbereich des Labels 1 in den Figuren 2 und 3 vergrößert dargestellt.

Wie aus den Figuren 2 und 3 ersichtlich, sind jeweils von einer Labelkante 3 des einspringenden Eckbereichs 2' ausgehend Einschnitte bzw. Schlitze 4 und 5 vorgesehen. In Fig. 2 handelt es sich bei diesen erfindungsgemäßen Schlitzen um fünf gleichlange Schnitte 4. In Fig. 3 befinden sich an gleicher Stelle des einspringenden Eckbereichs 2'fünf gleichlange Einschnitte bzw. Einkerbungen 5, die von der Labelkante 3 ausgehend aus dem Label 1 herausgeschnitten wurden.

Durch das erfindungsgemäße Einbringen von Einschnitten 4, 5 in Form von Schnitten und/oder Einkerbungen etc. in das Label 1 bzw. in dessen Labelkanten 3 in den Eckbereichen 2' kann dieses nun in idealer Passform in die Spritzgussform eingelegt und ein Unterspritzen des Labels 1 während des Produktionsvorgangs verhindert werden.

Die Erfindung ist nicht auf die dargestellten Ausführungsbeispiele beschränkt, sondern auch andere Bereiche und Kanten anders ausgebildeter Label können entsprechend der Erfindung mit Einschnitten bzw. Schlitzen versehen werden, so dass ein einwandfreies Anliegen der Label in der Form gegeben ist. Die dafür erforderliche Kenntnis der Anzahl, Länge und Form der notwendigen Schlitze sind dann durch entsprechende Tests festzulegen.

## Patentansprüche

1. Label zur Oberflächenausgestaltung von Behältnissen durch "Inmouldlabeling", insbesondere zur Oberflächengestaltung der Seitenflächen und/oder Böden von im Horizontalquerschnitt in etwa rechteckigen, ovalen oder runden Kunststoffbehältnissen, wobei vor der Abformung der Behältnisse mittels Spritzgusstechnik das Label (1) mit Ecken (2) ausgebildet in die Form eingeführt und auf dem Formkern oder an die Kontur der Formvertiefung angelegt wird, **dadurch gekennzeichnet, dass** zur besseren Anlage des Labels (1) an die Kontur bzw. auf dem Kern der Form in mindestens einem einspringenden Eckbereich (2') einer Ecke (2) des Labels (1), von mindestens einer Labelkante (3) ausgehend, jeweils mindestens ein Einschnitt (4, 5) vorgesehen ist.

2. Label (1) nach Anspruch 1, **dadurch gekennzeichnet, dass** in allen Eckbereichen (2') des Labels (1) Einschnitte (4, 5) an den Labelkanten (3) vorgesehen sind.

3. Label (1) nach Anspruch 1 oder 2, **dadurch gekennzeichnet, dass** jeweils mehrere Einschnitte (4, 5) an den Labelkanten (3) angeordnet sind.

4. Label (1) nach Anspruch 3, **dadurch gekennzeichnet, dass** die Einschnitte (4, 5) parallel zueinander angeordnet sind.

5. Label (1) nach einem oder mehreren der Ansprüche 2 bis 4, **dadurch gekennzeichnet, dass** die Einschnitte (4, 5) unterschiedliche Länge aufweisen.

6. Label (1) nach einem oder mehreren der Ansprüche 2 bis 5, **dadurch gekennzeichnet, dass** die Einschnitte (4, 5) unterschiedliche Form besitzen.

7. Label (1) nach einem oder mehreren der Ansprüche 1 bis 6, **dadurch gekennzeichnet, dass** die Kanten der Einschnitte (4) einander berühren.

8. Label (1) nach einem oder mehreren der Ansprüche 1 bis 6, **dadurch gekennzeichnet, dass** die Einschnitte (5) als unten abgerundete Einkerbungen ausgebildet sind.

9. Label (1) nach einem oder mehreren der Ansprüche 1 bis 6, **dadurch gekennzeichnet, dass** die Einschnitte (5) als spitzwinklige Dreiecke ausgebildet sind.

10. Label (1) nach einem oder mehreren der Ansprüche 1 bis 6, **dadurch gekennzeichnet, dass** die Einschnitte (5) als schlüsselbartähnliche Einkerbungen mit einer Rundung im Kerbgrund ausgebildet sind.

11. Label (1) nach einem oder mehreren der Ansprüche 1 bis 10, **dadurch gekennzeichnet, dass** die Einschnitte (4, 5) im Eckbereich (2') an der der gekrümmten Seite gegenüberliegenden geraden Labelkante (3) angeordnet sind.

12. Label (1) nach einem oder mehreren der Ansprüche 1 bis 11, **dadurch gekennzeichnet, dass** die Einschnitte (4, 5) in jeweils dem gleichen Teilbereich einer Labelkante (3) angeordnet sind.

13. Label (1) nach einem oder mehreren der Ansprüche 1 bis 12, **dadurch gekennzeichnet, dass** die Ecken der Einschnitte (4, 5) zur Labelkante (3) abgerundet sind.

## Claims

1. Label for surface configuration of containers by 'in-mould labelling', particularly for surface configuration of the side surfaces and/or base of plastics material containers which are approximately rectangular, oval or round in horizontal cross-section, wherein prior to moulding the container by means of an injection moulding process the label (1) constructed with corners (2) is introduced into the mould and placed on the mould core or against the contour of the mould recess, **characterised in that** for better laying of the label (1) against the contour or on the core of the mould at least one respective incision (4, 5) going out from at least one label edge (3) is provided in at least one re-entrant corner region (2') of a corner (2) the label (1).

2. Label (1) according to claim 1, **characterised in that** incisions (4, 5) at the label edges (3) are provided in all corner regions (2') of the label (1).

3. Label (1) according to claim 1 or 2, **characterised in that** in each instance several incisions (4, 5) are arranged at the label edges (3).

4. Label (1) according to claim 3, **characterised in that** the incisions (4, 5) are arranged parallel to one another.

5. Label (1) according to one or more claims of 2 to 4, **characterised in that** the incisions (4, 5) have a different length.

6. Label (1) according to one or more claims of 2 to 5, **characterised in that** the incisions (4, 5) have different shape.

7. Label (1) according to one or more of claims 1 to 6, **characterised in that** the edges of the incisions (4) contact one another.

8. Label (1) according to one or more of claims 1 to 6, **characterised in that** the incisions (5) are formed as downwardly rounded notches.

9. Label (1) according to one or more of claims 1 to 6, **characterised in that** the incisions (5) are formed as acute triangles.

10. Label (1) according to one or more of claims 1 to 6, **characterised in that** the incisions (5) are formed as notches similar to a key web with a radiusing in the notch base.

11. Label (1) according to one or more of claims 1 to 10, **characterised in that** the incisions (4, 5) in the corner region (2') are arranged at the straight label edge (3) opposite the curved side.

12. Label (1) according to one or more of claims 1 to 11, **characterised in that** the incisions (4, 5) are respectively arranged in the same part region of the label edge (3).

13. Label (1) according to one or more of claims 1 to 12, **characterised in that** the corners of the incisions (4, 5) are radiused with respect to the label edge (3).

## Revendications

1. Etiquette pour garnir la surface d'un récipient obtenue par étiquetage dans un moule notamment pour la configuration superficielle des surfaces latérales et/ou du fond de récipient en matière plastique ayant en section horizontale une forme sensiblement rectangulaire, ovale ou ronde, l'étiquette (1) avec des coins (2) étant introduite dans le moule avant le moulage du récipient par injection, appliquée contre le noyau du moule ou contre le contour de la cavité du moule,
**caractérisée en ce que**
pour assurer un meilleur appui de l'étiquette (1) contre le contour ou contre le noyau du moule, dans au moins une zone de coin (2') d'un coin (2) à injecter de l'étiquette (1), il y a chaque fois au moins une encoche (4, 5) partant du bord (3) de l'étiquette.

2. Etiquette (1) selon la revendication 1,
**caractérisée en ce que**
dans toutes les zones de coin (2') de l'étiquette (1) il y a des entailles (4, 5) des arêtes (3) de l'étiquette.

3. Etiquette (1) selon l'une quelconque des revendications 1 ou 2,
**caractérisée en ce que**
plusieurs entailles (4, 5) respectives sont prévues sur les arêtes (3) de l'étiquette.

4. Etiquette (1) selon la revendication 3,
**caractérisée en ce que**
les entailles (4, 5) sont parallèles.

5. Etiquette (1) selon l'une quelconque des revendications 2 à 4,
**caractérisée en ce que**
les entailles (4, 5) ont des longueurs différentes.

6. Etiquette (1) selon l'une quelconque des revendications 2 à 5,
**caractérisée en ce que**
les entailles (4, 5) ont une forme différente.

7. Etiquette (1) selon l'une quelconque des revendications 1 à 6,
**caractérisée en ce que**
les arêtes des entailles (4) se touchent.

8. Etiquette (1) selon l'une quelconque des revendications 1 à 6,
**caractérisée en ce que**
les entailles (7) sont réalisées sous la forme d'encoches à fond arrondi.

9. Etiquette (1) selon l'une quelconque des revendications 1 à 6,
**caractérisée en ce que**
les entailles (5) ont une forme de triangle aigu.

10. Etiquette (1) selon l'une quelconque des revendications 1 à 6,
**caractérisée en ce que**
les entailles (5) sont réalisées sous la forme d'encoches analogues à une arête de clé avec un arrondi au fond de l'entaille.

11. Etiquette (1) selon l'une quelconque des revendications 1 à 10,
**caractérisée en ce que**
les entailles (4, 5) sont prévues dans la zone de coin (2') de l'arête droite (3) de l'étiquette en regard du côté arrondi.

12. Etiquette (1) selon l'une quelconque des revendications 1 à 11,
**caractérisée en ce que**
les entailles (4, 5) sont prévues chaque fois dans la même zone partielle d'une arête d'étiquette (3).

13. Etiquette (1) selon l'une quelconque des revendications 1 à 12,
**caractérisée en ce que**
les coins des entailles (4, 5) sont arrondis en direction de l'arête (3) de l'étiquette.
